# FASCICULE DE BREVET EUROPEEN

(11) **EP 2 683 931 B1**
(45) Date de publication et mention de la délivrance du brevet: **05.10.2016**
(21) Numéro de dépôt: 12705249.6
(22) Date de dépôt: 13.02.2012
(51) Int. Cl.: F02M 31/20, F02M 35/10, F02B 29/04

(54) **BOITIER D'ADMISSION COMPRENANT UN ECHANGEUR THERMIQUE**
EINLASSGEHÄUSE MIT EINEM WÄRMETAUSCHER
INTAKE HOUSING INCLUDING A HEAT EXCHANGER

(30) Priorité: 10.03.2011 FR 1151992
(43) Date de publication de la demande: 15.01.2014
(73) Titulaire: Valeo Systèmes Thermiques, 78320 Le Mesnil-Saint-Denis (FR)
(72) Inventeur: VALLEE, Nicolas, F-51110 Bazancourt (FR); NAUDIN, Yoann, F-08300 Saint Loup en Champagne (FR); SCHILD, Olivier, F-02190 Guignicourt (FR); ONETTI, Demetrio, F-51370 Saint-Brice Courcelles (FR); PICHENOT, Yann, F-02160 Longueval (FR)
(74) Mandataire: Metz, Gaëlle
(86) Numéro de dépôt international: PCT/EP2012/052390
(87) Numéro de publication internationale: WO 2012/119834

(56) Documents cités:
- WO-A1-2005/001272
- WO-A1-2009/156365
- WO-A1-2010/146063

## Description

L'invention concerne un boîtier d'admission d'un flux de gaz d'alimentation d'un moteur à combustion interne et un module d'admission de flux de gaz d'alimentation, munis d'un tel boîtier. Par gaz, il faut entendre l'air ou un mélange d'air et de gaz d'échappement.

L'invention trouvera en particulier ses applications comme partie intégrante d'un dispositif d'admission de gaz, pour l'introduction desdits gaz dans la culasse d'un moteur à combustion interne de véhicule automobile.

Un moteur à combustion interne de véhicule automobile comporte une pluralité de chambres de combustion délimitées chacune par un piston, un cylindre et une portion d'une culasse. Ces chambres de combustion reçoivent un mélange de comburant et de carburant voués à être brûlés pour générer le travail du moteur. Le comburant comporte de l'air, qui peut être comprimé ou non, selon que le moteur comporte un turbocompresseur ou non. L'air peut par ailleurs être mélangé à des gaz d'échappement dits gaz d'échappement recirculés. Les gaz admis dans la chambre de combustion seront ci-après dénommés gaz d'alimentation.

Il est connu d'augmenter la densité de ces gaz d'alimentation en procédant à un refroidissement de ces derniers, par exemple en favorisant un échange thermique entre les gaz d'alimentation et un flux d'air extérieur au véhicule par l'intermédiaire d'un échangeur thermique air/air.

Il est également connu de réaliser ce refroidissement par échange entre les gaz d'alimentation et un fluide dit de refroidissement, par exemple réalisé sous la forme d'un liquide qui circule dans un échangeur thermique traversé par les gaz d'alimentation.

Dans le cas précédent, l'échangeur thermique est installé à l'intérieur d'un boîtier qui délimite le circuit d'admission vis-à-vis de l'air environnant le moteur à combustion interne. Ce boîtier peut, par exemple, être réalisé en un matériau plastique et l'échangeur thermique est alors logé dans ce boîtier fabriqué à partir d'un matériau plastique. Il ressort cependant que ce type de boîtier plastique ne résiste pas aux températures élevées qui peuvent être rencontrées notamment lorsque le moteur à combustion interne est équipé d'un turbocompresseur et/ou lorsque le moteur à combustion interne utilise le diesel comme carburant.

Cette situation a été surmontée par l'utilisation de boîtiers métalliques réalisés à partir d'un procédé de fonderie. L'échangeur thermique présente alors des parois épaisses et on coiffe ce dernier d'une boîte d'entrée et d'une boîte de sortie pour les gaz d'admission issues de fonderie. Le boîtier d'admission est ensuite rendu étanche en soudant la boîte d'entrée et la boîte de sortie sur les parois épaisses de l'échangeur thermique. Une telle solution, bien que satisfaisante pour supporter les contraintes thermiques, est lourde à mettre en oeuvre, notamment à cause de l'emploi de pièce de fonderie. Par ailleurs, les étapes d'assemblage sont nombreuses, ce qui grèvent le coût de ce composant.

Le document WO2010/146063A1 décrit un boîtier d'admission d'air comprenant un couvercle en matière plastique ou en métal et une extension issue de matière avec le couvercle. Un renfort mécanique est réalisé en forme de rainures qui s'étendent sur le couvercle entier.

Le but de la présente invention est donc de résoudre les inconvénients décrits ci-dessus principalement en réalisant un boîtier d'admission dont la paroi qui ceint ou entoure l'échangeur thermique est prolongée afin de border un volume d'entrée et/ou un volume de sortie où le flux de gaz d'alimentation circule, c'est-à-dire un volume où le flux de gaz entre ou sort de l'échangeur thermique.

L'invention a donc pour objet un boîtier d'admission d'un moteur à combustion interne selon la revendication 1. Le boîtier est apte à recevoir un échangeur thermique entre un flux de gaz d'alimentation circulant dans le boîtier et un fluide dit de refroidissement, ledit boîtier d'admission comprenant un volume de circulation de gaz d'alimentation et un volume de réception de l'échangeur thermique, ledit volume de réception de l'échangeur étant délimité par au moins un premier élément métallique qui comprend une extension issue de matière avec le premier élément métallique, ladite extension délimitant au moins en partie le volume de circulation de gaz d'alimentation. On comprend que le volume de réception est un volume dans lequel s'inscrit l'échangeur thermique, mais strictement limité à ce dernier. On comprend également que le volume de circulation est la zone du boîtier comprise entre une face frontale de l'échangeur thermique et l'orifice par lequel le flux de gaz d'alimentation circule, que cela soit pour entrer ou sortir du boîtier.

Selon une première caractéristique de l'invention, l'élément métallique est une plaque constituée au moins en partie d'aluminium.

Selon une variante distincte ou complémentaire, la forme de l'élément métallique est réalisée par emboutissage.

Selon une deuxième caractéristique de l'invention, l'extension s'étend dans un plan confondu à un plan d'extension de l'élément métallique. Une telle solution facilite la fabrication de l'élément métallique et de l'extension.

Selon une autre caractéristique de l'invention, le volume de réception est délimité par un deuxième élément métallique qui comprend une extension issue de matière avec le deuxième élément métallique, ladite extension délimitant le volume de circulation de gaz d'alimentation de manière opposée au premier élément par rapport à l'échangeur thermique. On comprend ici que l'échangeur thermique est interposé entre deux éléments métalliques qui sont chacun prolongé par une extension définissant un volume de circulation de flux.

Selon encore une caractéristique de l'invention, le boîtier d'admission comprend un couvercle qui s'étend entre le premier élément métallique et le deuxième élément métallique pour délimiter le volume de circulation de gaz d'alimentation. Ce volume est ainsi bordé exclusivement par les extensions issues des éléments métalliques et par une paroi formant couvercle pour isoler le volume de circulation par rapport au milieu environnant le boîtier d'admission.

Selon encore une autre caractéristique de l'invention, l'extension comprend au moins un renfort mécanique. Selon l'invention, ce renfort mécanique prend la forme d'une ou plusieurs nervures pratiquées en travers de l'extension. Une telle disposition limite la déformation de l'extension consécutive à la pression du gaz d'alimentation à l'intérieur du volume de circulation.

Avantageusement, le premier élément métallique est solidaire de l'échangeur thermique. Une telle disposition permet de réaliser une pièce intermédiaire monobloc qui comprend l'échangeur thermique et délimite au moins en partie le volume de circulation de gaz d'alimentation vers et/ou en provenance de l'échangeur thermique. En fois assemblé, l'échangeur thermique comprend ainsi des parois qui bordent au moins en partie la chambre d'entrée et/ou la chambre de sortie du boîtier d'admission.

Avantageusement encore, le premier élément métallique est une plaque d'extrémité faisant partie de l'échangeur thermique. La plaque d'extrémité fait ainsi partie de l'assemblage des pièces constitutives de l'échangeur qui sont accolées les unes aux autres préalablement à une étape de brasage, notamment par passage dans un four.

On notera tout particulièrement que le volume de circulation de gaz d'alimentation présente un orifice d'admission dudit gaz, ladite extension étant majoritairement réalisée du côté de l'orifice d'admission.

Enfin, l'invention vise un module d'admission d'air d'un moteur à combustion interne comprenant un boîtier d'admission tel que présenté ci-dessus et un échangeur thermique, prévu dans ou à l'intérieur du boîtier d'admission au niveau de la zone de réception.

Un tout premier avantage selon l'invention réside dans la mise à disposition d'un boîtier d'admission de réalisation simple et économique, et susceptible de résister aux températures d'admission élevées.

Un autre avantage réside dans la possibilité de fabriquer les parois du boîtier d'admission en même temps qu'est réalisé l'échangeur thermique, de sorte à former un élément unitaire sur lequel est ajouté un couvercle pour finalement constituer un produit fini qu'est un module d'admission d'air.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un exemple de réalisation d'un boîtier d'admission selon l'invention,
- la figure 2 est une vue en perspective d'un exemple de réalisation d'un module d'admission selon l'invention.

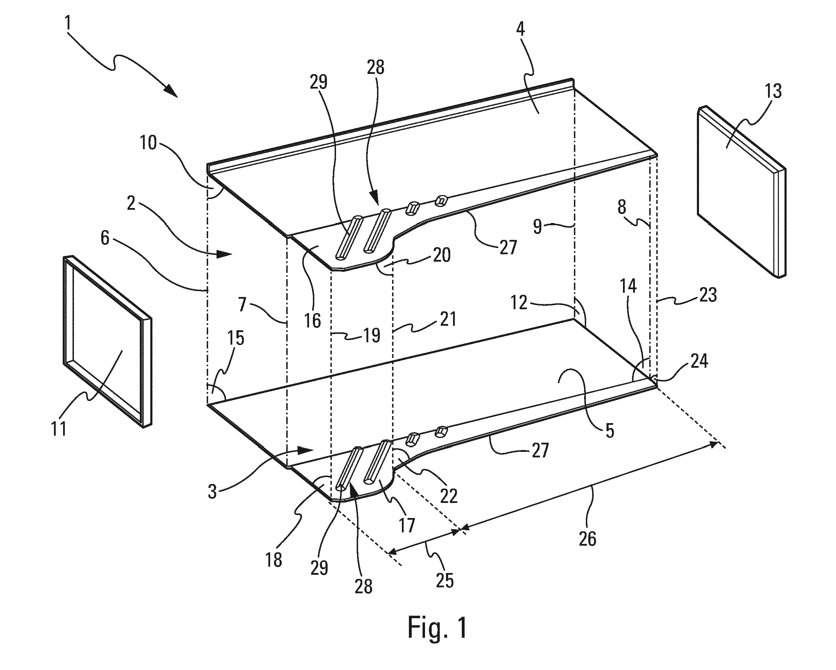

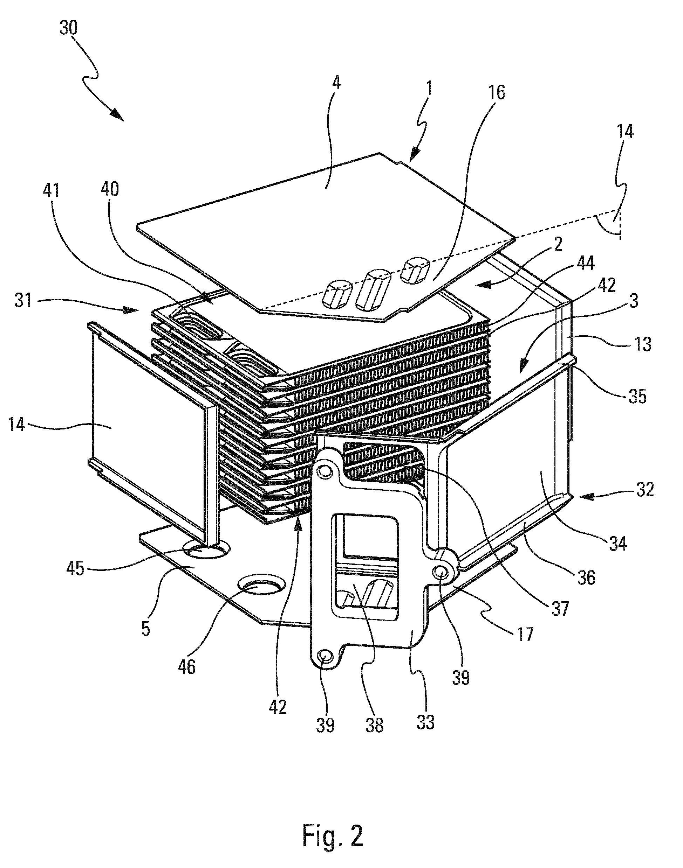

La figure 1 illustre un exemple de réalisation du boîtier d'admission 1 de l'invention. Un tel boîtier reçoit un échangeur thermique (visible sur la figure 2), autrement appelé échangeur de chaleur, traversé par un flux de gaz d'alimentation circulant dans le boîtier. Cet échangeur thermique a pour fonction principale de refroidir les gaz d'alimentation préalablement à leur entrée dans les chambres de combustion d'un moteur à combustion interne équipant un véhicule automobile. Le refroidissement du flux de gaz est opéré par un transfert thermique entre ce flux et un fluide de refroidissement qui circule au coeur de l'échangeur thermique. Ce fluide est, par exemple, un fluide de refroidissement qui circule dans une boucle de refroidissement qui équipe le véhicule. Une telle boucle ou circuit de refroidissement du moteur participe au conditionnement thermique du moteur à combustion interne qui équipe le véhicule.

Le boîtier d'admission 1 comprend ou délimite un volume de réception 2 de l'échangeur thermique et un volume de circulation 3 des gaz d'alimentation.

Le volume de réception 2 est la zone du boîtier d'admission 1 dans laquelle s'étend l'intégralité de l'échangeur thermique. Autrement dit, le volume de réception 2 est identique ou sensiblement identique au volume occupé par l'échangeur thermique.

De manière plus précise, ce volume de réception 2 est délimité par au moins un premier élément métallique 4. Un deuxième élément métallique 5 délimite également le volume de réception 2 et ce deuxième élément métallique 5 est installé à l'opposé du premier élément métallique 4 par rapport au volume de réception 2, autrement dit par rapport à l'échangeur thermique. Le premier élément métallique 4 et/ou le deuxième élément métallique 5 sont chacun une plaque réalisée au moins en partie avec de l'aluminium. Il s'agira avantageusement d'un alliage d'aluminium susceptible d'être brasé à l'intérieur d'un four.

Le premier élément métallique 4 et le deuxième élément métallique 5 s'étendent dans des plans parallèles et distincts. Des traits en pointillé référencés 6 à 9 rejoignent les angles des deux éléments métalliques 4 et 5. Ces traits en pointillé illustrent les angles qui bordent la zone de réception 2.

Un premier plan latéral 10 passe par le premier trait 6 et le deuxième trait 7. Ce premier plan latéral délimite l'un des côtés de la zone de réception et il est prévu d'installer une première joue 11 dans le premier plan latéral 10 pour fermer ce côté du volume de réception 2.

A l'opposé de ce premier plan latéral 10 par rapport à la zone de réception 2, on trouve un second plan latéral 12, notamment parallèle au premier plan latéral 10. Ce second plan latéral 12 passe par le troisième trait 8 et le quatrième trait 9, et délimite ainsi le volume de réception 2 de l'échangeur thermique. Ce second plan latéral 12 reçoit une seconde joue 13 qui vient fermer le volume de réception 2 de l'échangeur thermique du côté opposé à celui qui reçoit la première joue 11.

Perpendiculairement au premier plan latéral 10 et au deuxième plan latéral 12, on trouve un plan frontal 14 et un plan arrière 15.

Le plan frontal 14 passe par le deuxième trait 7 et par le troisième trait 8 et définit une face d'entrée des gaz d'alimentation à l'intérieur de l'échangeur thermique. Cette d'entrée est notamment parallèle et/ou confondu à une face frontale de l'échangeur qui est apparente sur la figure 2.

Le plan arrière 15 passe par le premier trait 6 et par le quatrième trait 9. Ce plan arrière 15 est par exemple parallèle à une face arrière de l'échangeur thermique par laquelle le flux de gaz d'alimentation est évacué ou sort de l'échangeur thermique.

On comprend ainsi que le flux de gaz d'alimentation qui circule entre le plan frontal 14 et le plan arrière 15 circule au travers de l'échangeur thermique et se trouve refroidit par la circulation de fluide liquide à l'intérieur d'un faisceau constitutif de l'échangeur.

Le volume de réception 2 de l'échangeur thermique est ainsi délimité en totalité par :
- le premier et le deuxième élément métallique 4 et 5,
- le premier et le second plan latéral 10 et 12, et
- le plan frontal 14 et le plan arrière 15.

Pour entrer ou sortir du volume de réception, il est nécessaire de ménager des zones ou portions d'entrée et/ou de sortie. Le volume de circulation de l'invention forme une telle zone ou portion.

Selon l'exemple de la figure 1, le volume de circulation 3 de gaz d'alimentation est délimité au moins partiellement par une extension 16 du premier élément métallique 4. Cette extension 16 est issue de matière avec le premier élément métallique 4 en ce sens que l'extension 16 prolonge le premier élément métallique, avec le même matériau constitutif de cet élément métallique et sans la présence d'une soudure ou d'un quelconque métal d'apport. En d'autres termes, l'élément métallique et l'extension sont réalisés d'un seul tenant à partir d'une même plaque ou d'un même feuillard.

L'élément métallique et son extension sont avantageusement formés par une opération découpage et emboutissage. Un tel procédé de formage est rendu possible par le fait que l'élément métallique est issu d'un feuillard plutôt qu'issue d'un procédé de fonderie.

L'exemple qui suit décrit le volume de circulation 3 dans un cas où ce volume constitue une zone ou chambre d'entrée du flux de gaz d'alimentation dans l'échangeur. Il est évident que l'invention n'est pas limitée à une telle situation et on comprendra que ce volume de circulation, délimité par l'extension, peut également être une chambre de sortie des gaz d'alimentation, c'est-à-dire après passage au travers de l'échangeur thermique.

L'extension 16 du premier élément métallique délimite au moins en partie le volume de circulation 3 en ce sens que cette extension canalise le flux de gaz d'alimentation en direction de l'échangeur thermique. Selon une variante de réalisation de l'invention, le volume de circulation 3 est également délimité ou bordé par une extension 17 qui fait partie du deuxième élément métallique 5.

Ce volume de circulation 3 est encore délimité par un premier secteur plan 18 qui passe par le deuxième trait 7 et par un cinquième trait en pointillé, référencé 19. La délimitation de ce volume de circulation 3 se poursuit par un premier secteur courbe 20 qui passe par le cinquième trait 19 et par un sixième trait en pointillé référencé 21. Ce dernier est placé à un point d'inflexion qui délimite le premier secteur courbe 20 vis-à-vis d'un second secteur courbe 22 qui s'étend jusqu'à un septième trait en pointillé 23. Le volume de circulation 3 est encore délimité par un second secteur plan 24 qui passe par le septième trait 23 et par le troisième trait 8. Ce volume de circulation 3 est enfin délimité par le plan frontal 14. Dans la description faite à ce paragraphe, on notera que le volume de circulation 3 est dépourvu de l'échangeur thermique, celui-ci étant cantonné au volume de réception 2.

Le volume de circulation 3 du flux de gaz d'alimentation est ainsi délimité en totalité par :
- l'extension 16 du premier élément 4 et l'extension 17 du deuxième élément 5,
- le premier et le deuxième secteur plan 18 et 24,
- le premier et le deuxième secteur courbe 20 et 22, et
- le plan frontal 14.

La section du volume de circulation 3 évolue du premier secteur plan 18 jusqu'au deuxième secteur plan 24, mais il faut retenir que ce volume de circulation présente une première portion 25 plus large qu'une seconde portion 26, cette largeur correspondant à la distance qui sépare le plan frontal 14 du bord 27 de l'extension 16 ou 17. Le volume de circulation 3 de gaz d'alimentation présente un orifice d'admission des gaz qui s'étend parallèlement au premier secteur plan 18. Il s'agit de l'ouverture par laquelle le flux de gaz d'alimentation pénètre dans le volume de circulation 3, et donc dans le boîtier d'admission selon l'invention. Cet orifice d'admission présente ainsi une longueur définie par la distance qui sépare l'extension 16 du premier élément métallique de l'extension 17 du deuxième élément métallique 5. La largeur de cet orifice est définie par la distance qui sépare le deuxième trait 7 et le cinquième trait 19. On comprend ainsi que l'extension est majoritairement réalisée du côté de l'orifice d'admission, sa largeur étant plus importante au niveau de la première portion 25 qu'au niveau de la seconde portion 26.

L'extension 16 du premier élément métallique 4 et/ou l'extension 17 du deuxième élément métallique 5 comprend au moins un renfort mécanique 28. Dans un exemple de réalisation illustré sur cette figure, le renfort mécanique 28 prend la forme d'une ou plusieurs nervures ou déformations 29 réalisées par déformation de la plaque constitutive de l'extension. Ce renfort mécanique est limité à l'extension et ne s'étend pas sur l'élément métallique. Cette disposition apporte un renfort structurel au niveau des extensions pour éviter que ces dernières ne se déforment sous l'effet de la pression dans le boîtier d'admission, notamment dans le cas de moteur à combustion interne équipé de compresseur ou turbocompresseur.

La figure 2 montre le module d'admission 30 de l'invention. Ce module d'admission est constitué d'un boîtier d'admission 1 tel qu'illustré sur la figure 1 et d'un échangeur thermique 31. Avantageusement, ce module d'admission 30 est complété par l'installation d'un couvercle 32. Au surplus, une bride 33 peut être ajoutée.

Le couvercle 32 est un élément qui vient fermer le volume de circulation 3 de sorte à isoler le flux de gaz d'admission qui circule dans le boîtier vis-à-vis de l'extérieur de ce boîtier. Ce couvercle s'étend dans au moins un plan perpendiculaire au plan dans lequel s'étend l'extension 16. Le couvercle 32 débute au niveau de l'extension 16 du premier élément métallique 4 et se termine au niveau de l'extension 17 du deuxième élément métallique 5, ce qui permet de délimiter le volume de circulation 3 conjointement avec l'extension 16 du premier élément métallique 4 et avec l'extension 17 du deuxième élément métallique 5.

Ce couvercle 32 est fabriqué à partir d'une tôle ou feuillard métallique, notamment en aluminium ou en alliage d'aluminium. Ce couvercle est mis en forme par un procédé d'emboutissage. Ce couvercle 32 comprend une bande centrale 34 de forme sensiblement parallélépipédique et deux flancs référencés 35 et 36 qui s'étendent dans la longueur de la bande centrale 34. Ces flancs 35 et 36 s'étendent dans un plan perpendiculaire au plan d'extension de la bande centrale. Ils sont par exemple réalisés par une opération de pliage, ou pendant l'opération d'emboutissage.

Ce couvercle 32 présente un premier secteur débutant à une extrémité longitudinale du couvercle. Ce premier secteur s'étend dans un premier plan et se poursuit par un deuxième secteur qui s'étend dans un deuxième plan incliné par rapport au premier plan selon un angle compris, par exemple, entre 40 et 90°, selon un pliage dans le sens trigonométrique. Le couvercle 1 présente alors une forme générale en « L ».

L'orifice d'admission 37, par lequel le flux de gaz d'alimentation pénètre dans le volume de circulation 3, est pratiqué au travers du deuxième secteur du couvercle 32. La bride 33 comprend une ouverture centrale 38 de dimensions sensiblement équivalentes aux dimensions de l'orifice d'admission 37. Cette bride 33 est rapportée sur le deuxième secteur du couvercle 32 et présente des moyens de fixations 39 pour solidariser une conduite du circuit d'admission du moteur du véhicule.

Un exemple de réalisation de l'échangeur thermique va maintenant être décrit.

L'échangeur thermique 31 comprend un faisceau 40 et une zone de répartition 41 du fluide de refroidissement dans le faisceau. Le faisceau 40 est la portion vouée à l'échange thermique entre le flux de gaz d'alimentation et le fluide de refroidissement. L'échangeur thermique comprend une pluralité de tubes 42, chacun réalisé par un couple de plaques accolées l'une contre l'autre. Un passage entre ces plaques définit la circulation du fluide liquide de refroidissement dans le faisceau 40. Le plan qui passe par le bord de chaque tube définit une face frontale 43 de l'échangeur thermique 31, cette face étant la première traversée par le flux de gaz d'alimentation selon le sens de circulation de ce dernier dans le module d'admission 30. Le plan qui passe par cette face frontale 43 est ici parallèle et/ou confondu avec le plan frontal 14 qui sépare le volume de réception 2 par rapport au volume de circulation 3.

L'échangeur thermique 31 comprend également la zone de répartition 41 du fluide de refroidissement où le fluide de refroidissement est canalisé pour être distribué à chaque tube 42 du faisceau 40. Entre chaque tube 42, on trouve un intercalaire 44 de forme ondulée, dont la fonction est de favoriser le transfert thermique entre le fluide de refroidissement et le flux de gaz d'alimentation circulant dans le module d'admission 30.

Le premier élément métallique 4, équipé de son extension 16, est solidaire de l'échangeur thermique 31. Selon un exemple de réalisation, le premier élément métallique est soudé sur l'échangeur thermique après constitution de ce dernier. Selon une autre variante de réalisation, le premier élément métallique 4 est une plaque d'extrémité de l'échangeur thermique 31 faisant partie de ce dernier. Une plaque d'extrémité est un composant accolé à l'échangeur thermique et solidarisé à celui-ci en même temps que les autres composants de l'échangeur thermique, notamment les plaques et les intercalaires. Cette plaque d'extrémité peut être accolée au dernier intercalaire de l'échangeur thermique de sorte à lui assurer une protection mécanique. Cette plaque peut également participer à la formation d'un tube 42 dans lequel circule le fluide liquide.

Le paragraphe ci-dessus fait mention du premier élément métallique 4 mais il va de soi que l'échangeur peut être fabriqué en intégrant le premier élément métallique 4 et le deuxième élément métallique 5, chacun d'eux comprenant une extension délimitant une chambre d'entrée et/ou de sortie du boîtier d'admission.

Le figure 2 montre également la présence d'un premier trou 45 et d'un second trou 46 pratiqués au travers de l'un au moins des éléments métalliques 4 ou 5. Dans le cas présent, les deux trous 45 et 46 sont réalisés au travers du deuxième élément métallique 5 sensiblement en face de la zone de répartition 41 par laquelle le fluide est distribué dans les tubes 42. Ces deux trous permettent au fluide de refroidissement de pénétrer dans l'échangeur thermique 31 et servent de siège à la réception de tubulures rapportées sur l'élément métallique, par exemple simultanément au brasage du boîtier d'admission 1 ou du module d'admission 30.

La description ci-dessus fait mention d'une extension ou excroissance par élément métallique mais l'invention couvre également le cas où au moins un des deux éléments métalliques comprend une pluralités d'extensions ou excroissances qui s'étendent de part et d'autre de la portion de l'élément métallique qui couvre ou chevauche la zone de réception 2 de l'échangeur thermique. Une telle disposition permet de réaliser un boîtier d'admission intégrant :
- un volume de réception d'un échangeur thermique délimité par un élément métallique,
- une chambre d'admission située en amont du volume de réception selon le sens de déplacement du flux dans le boîtier,
- une chambre d'évacuation située en aval du volume de réception selon le sens de déplacement du flux dans le boîtier,
- chaque chambre étant au moins délimitée par une extension issue de matière avec l'élément métallique.

Un module d'admission d'air selon l'invention est réalisé selon le procédé suivant :
- pré-assemblage d'au moins un échangeur thermique, un élément métallique 4 accolé à l'échangeur et comprenant une extension 16 et un couvercle 32,
- passage dans un four en vue de braser simultanément les composants pré-assemblés.

Selon une amélioration de ce procédé, la première joue 11 et la seconde joue 13 sont pré-assemblées en vue d'être brasées simultanément avec les composants pré-assemblés.

## Revendications

1. Boîtier d'admission (1) d'un moteur à combustion interne apte à recevoir un échangeur thermique (31) entre un flux de gaz d'alimentation circulant dans le boîtier et un fluide dit de refroidissement, ledit boîtier d'admission (1) comprenant un volume de circulation (3) de gaz d'alimentation et un volume de réception (2) de l'échangeur thermique (31), ledit volume de réception (2) étant délimité par au moins un premier élément métallique (4, 5) qui comprend au moins une extension (16, 17) issue de matière avec le premier élément métallique (4, 5), ladite extension (16, 17) délimitant au moins en partie le volume de circulation (3) de gaz d'alimentation **caractérisé en ce que** ladite extension (16, 17) comprend au moins un renfort mécanique (28) prenant la forme d'une ou plusieurs déformations (29) réalisées par déformation de la plaque constitutive de l'extension et limité à l'extension.

2. Boîtier d'admission selon la revendication 1, dans lequel le premier élément métallique (4, 5) est une plaque constituée au moins en partie d'aluminium et réalisée par emboutissage.

3. Boîtier d'admission selon la revendication 1 ou 2, dans lequel l'extension (16, 17) s'étend dans un plan confondu à un plan d'extension du premier élément métallique (4, 5).

4. Boîtier d'admission selon l'une des revendications 1 à 3, dans lequel le volume de réception (2) est délimité par un deuxième élément métallique (5) qui comprend une extension (17) issue de matière avec le deuxième élément métallique (5), ladite extension (7) délimitant le volume de circulation (3) de gaz d'alimentation de manière opposée au premier élément métallique (4) par rapport à l'échangeur thermique (31).

5. Boîtier d'admission selon la revendication 4, comprenant un couvercle (32) qui s'étend entre le premier élément métallique (4) et le deuxième élément métallique (5) pour délimiter le volume de circulation (3) de gaz d'alimentation.

6. Boîtier d'admission selon l'une quelconque des revendications précédentes, dans lequel le premier élément métallique (4) est solidaire de l'échangeur thermique (31).

7. Boîtier d'admission selon la revendication 6, dans lequel le premier élément métallique (4) est une plaque d'extrémité faisant partie de l'échangeur thermique (31).

8. Boîtier d'admission selon la revendication 4, dans lequel le volume de circulation (3) de gaz d'alimentation présente un orifice d'admission (37) dudit gaz, ladite extension (16, 17) étant majoritairement réalisée du côté de l'orifice d'admission (37).

9. Module d'admission (30) d'air d'un moteur à combustion interne comprenant un boîtier d'admission (1) selon l'une quelconque des revendications précédentes et un échangeur thermique (31), prévu dans ledit boîtier d'admission (1).

## Patentansprüche

1. Einlassgehäuse (1) einer Brennkraftmaschine, das geeignet ist, einen Wärmetauscher (31) zwischen einem Zufuhrgasstrom, der in dem Gehäuse zirkuliert, und einem Kühlfluid aufzunehmen, wobei das Einlassgehäuse (1) ein Zirkulationsvolumen (3) des Zufuhrgases und ein Aufnahmevolumen (2) des Wärmetauschers (31) aufweist, wobei das Aufnahmevolumen (2) durch mindestens ein erstes metallisches Element (4, 5) begrenzt ist, das mindestens eine Erweiterung (16, 17) aufweist, die aus demselben Material wie das erste metallische Element (4, 5) hervorgegangen ist, wobei die Erweiterung (16, 17) mindestens teilweise das Zirkulationsvolumen (3) des Zufuhrgases begrenzt, **dadurch gekennzeichnet, dass** die Erweiterung (16, 17) mindestens eine mechanische Verstärkung (28) aufweist, die die Form von einer oder mehreren Verformungen (29) annimmt, die durch Verformung der Platte hergestellt sind, die die Erweiterung bildet, und auf die Erweiterung beschränkt ist.

2. Einlassgehäuse nach Anspruch 1, wobei das erste metallische Element (4, 5) eine Platte ist, die mindestens teilweise aus Aluminium gebildet ist und durch Tiefziehen hergestellt ist.

3. Einlassgehäuse nach Anspruch 1 oder 2, wobei sich die Erweiterung (16, 17) in einer Ebene erstreckt, die mit einer Erweiterungsebene des ersten metallischen Elements (4, 5) zusammenfällt.

4. Einlassgehäuse nach einem der Ansprüche 1 bis 3, wobei das Aufnahmevolumen (2) durch ein zweites metallisches Element (5) begrenzt ist, das eine Erweiterung (17) aufweist, die aus demselben Material wie das zweite metallische Element (5) hervorgegangen ist, wobei die Erweiterung (7) das Zirkulationsvolumen (3) des Zufuhrgases in entgegengesetzter Richtung zu dem ersten metallischen Element (4) gegenüber dem Wärmetauscher (31) begrenzt.

5. Einlassgehäuse nach Anspruch 4, umfassend einen Deckel (32), der sich zwischen dem ersten metallischen Element (4) und dem zweiten metallischen Element (5) erstreckt, um das Zirkulationsvolumen (3) des Zufuhrgases zu begrenzen.

6. Einlassgehäuse nach einem der vorhergehenden Ansprüche, wobei das erste metallische Element (4) mit dem Wärmetauscher (31) fest verbunden ist.

7. Einlassgehäuse nach Anspruch 6, wobei das erste metallische Element (4) eine Endplatte ist, die Teil des Wärmetauschers (31) ist.

8. Einlassgehäuse nach Anspruch 4, wobei das Zirkulationsvolumen (3) des Zufuhrgases eine Einlassöffnung (37) des Gases aufweist, wobei die Erweiterung (16, 17) hauptsächlich auf der Seite der Einlassöffnung (37) erstellt ist.

9. Lufteinlassmodul (30) einer Brennkraftmaschine, das ein Einlassgehäuse (1) nach einem der vorhergehenden Ansprüche und einen Wärmetauscher (31) aufweist, der in dem Einlassgehäuse (1) vorgesehen ist.

## Claims

1. Intake housing (1) for an internal combustion engine, capable of receiving a heat exchanger (31) for exchanging heat between a feed gas stream circulating in the housing and a coolant, wherein said intake housing (1) includes a space (3) for the circulation of the feed gas and a space (2) receiving the heat exchanger (31), said receiving space (2) being defined by at least a first metal component (4, 5) including at least one extension (16, 17) that is in one piece with the first metal component (4, 5), said extension (16, 17) at least partially defining the space (3) for the circulation of the feed gas, **characterized in that** said extension (16, 17) includes at least one mechanical reinforcement (28) which takes the form of one or more deformations (29) produced by deformation of the plate constituting the extension and is limited to the extension.

2. Intake housing according to Claim 1, wherein the first metal component (4, 5) is a plate consisting at least in part of aluminum and produced by pressing.

3. Intake housing according to Claim 1 or 2, wherein the extension (16, 17) lies in a plane coinciding with a plane in which the first metal component (4, 5) lies.

4. The intake housing according to any one of Claims 1 to 3, wherein the receiving space (2) is delimited by a second metal component (5) that includes an extension (17) in one piece with the second metal component (5), said extension (7) delimiting the feed gas circulation space (3) on the side opposite the first metal component (4) relative to the heat exchanger (31).

5. Intake housing according to Claim 4, including a lid (32) that extends between the first metal component (4) and the second metal component (5) to delimit the feed gas circulation space (3).

6. Intake housing according to any one of the preceding claims, wherein the first metal component (4) is fastened to the heat exchanger (31).

7. Intake housing according to Claim 6, wherein the first metal component (4) is an end plate forming part of the heat exchanger (31).

8. Intake housing according to Claim 4, wherein the feed gas circulation space (3) includes an intake orifice (37) for said gas, said extension (16, 17) being for the most part on the same side as the intake orifice (37).

9. Air intake module (30) of an internal combustion engine, including an intake housing (1) according to any one of the preceding claims and a heat exchanger (31) in said intake housing (1).
